# EUROPÄISCHE PATENTSCHRIFT

(11) **EP 0 949 106 B1**
(45) Veröffentlichungstag und Bekanntmachung des Hinweises auf die Patenterteilung: **03.07.2002**
(21) Anmeldenummer: 98106691.3
(22) Anmeldetag: 11.04.1998
(51) Int. Cl.: B60K 17/04

(54) **Getriebe für ein Fahrzeug mit ausserhalb seiner Längsmittelebene angeordnetem Motor**
Gearbox for a vehicle with laterally offset engine
Boîte de vitesses pour véhicules à moteur déplacé hors du plan central longitudinal

(43) Veröffentlichungstag der Anmeldung: 13.10.1999
(73) Patentinhaber: Spicer Off-Highway Belgium N.V., B-8200 Brugge (BE)
(72) Erfinder: Vandepitte, Bart, 8750 Wingene (BE)
(74) Vertreter: Patentanwälte Rehberg + Hüppe

(56) Entgegenhaltungen:
- DE-A- 1 927 737
- US-A- 2 909 232
- US-A- 3 677 358

## Beschreibung

Die Erfindung bezieht sich auf ein Getriebe für ein Fahrzeug mit einem außerhalb der Längsmittelebene des Fahrzeugs angeordneten, einen Motorblock und eine Ausgangswelle aufweisenden Motor, wobei ein Untersetzungsgetriebe, das ein Gehäuse zum drehfesten Ansetzen an den Motorblock und eine zu seiner Eingangswelle versetzte Ausgangswelle aufweist, und ein Übertragungsgetriebe zum Antreiben von im Bereich der Längsmittelebene des Fahrzeugs verlaufenden Antriebswellen, das ein weiteres Gehäuse und ebenfalls eine zu seiner Eingangswelle versetzte Ausgangswelle aufweist, vorgesehen sind.

Ein solches gattungsgemäßes Getriebe ist aus der US 3677 358 bekannt.

Bei dem Fahrzeug mit dem außerhalb der Längsmittelebene des Fahrzeugs angeordneten Motor kann es sich um einen Teleskopmastgabelstapler handeln, der auch als Telescopic Boom Handler bezeichnet wird. Ein Telescopic Boom Handler weist einen in der Längsmittelebene des Fahrzeugs um eine horizontale Achse aufrichtbaren und teleskopierbaren Mast auf, der an seinem freien Ende eine Gabel zum Anheben von Lasten aufweist. Durch die Anordnung des aufrichtbaren und teleskopierbaren Masts in der Längsmittelebene des Fahrzeugs ist es sinnvoll, den Motor des Fahrzeugs außerhalb der Längsmittelebene anzuordnen ebenso wie eine Fahrerkabine für den Fahrer des Fahrzeugs. Typischerweise wird der Motor auf der einen Seite der Längsmittelebene und die Fahrerkabine auf der gegenüberliegenden Seite der Längsmittelebene des Fahrzeugs angeordnet. Durch die außermittige Anordnung des Motors ist es notwendig, das Drehmoment in die Längsmittelebene des Motors zu übertragen, wo günstigerweise die zu den angetriebenen Achsen des Fahrzeugs führenden Antriebswellen angeordnet sind. Für die Übertragung des Drehmoments ist ein Getriebe vorzusehen. Mit diesem Getriebe befaßt sich die vorliegende Erfindung. Dabei ist das Getriebe gleichzeitig ein Untersetzungsgetriebe für den Motor und wird in der Regel auch verschiedene Gänge, d. h. unterschiedliche Übersetzungen aufweisen. Zwischen den Übersetzungen kann ein automatisches oder manuelles Schalten erfolgen. Hierauf kommt es für die Erfindung im einzelnen nicht an.

Ein bekanntes Getriebe der eingangs beschriebenen Art, welches bei einem Telescopic Boom Handler der Firma Caterpillar Verwendung findet, weist ein Untersetzungsgetriebe auf, das zum drehfesten Ansetzen an einen um einige Grad aus der Längsmittelebene des Fahrzeugs geschränkten Motor vorgesehen ist. Zwischen der Ausgangswelle des Untersetzungsgetriebes und der Eingangswelle eines die Antriebswellen direkt antreibenden Übertragungsgetriebes ist eine kardanische Wellenverbindung vorgesehen, die die Anwinklung des Motors gegenüber der Längsmittelebene des Fahrzeugs kompensiert. Durch die kardanische Wellenverbindung zwischen dem Übertragungsgetriebe und dem Untersetzungsgetriebe ist das bekannte Getriebe sehr platzaufwendig. Zudem verlangt die kardanische Wellenverbindung eine genaue Einhaltung einer bestimmten geometrischen Anordnung, damit die von jedem Kardangelenk ausgehenden Gleichlaufschwankungen kompensiert werden.

Bei einem weiteren bekannten Getriebe für ein Fahrzeug mit einem außerhalb der Längsmittelebene des Fahrzeugs angeordneten Motor, welches bei einem Telescopic Boom Handler der Firma Gehl Verwendung findet, ist ein Übertragungsgetriebe zum Ansetzen an den Motor vorgesehen, das das Drehmoment zu einem in der Längsmittelebene des Fahrzeugs angeordneten Untersetzungsgetriebe überträgt, welches dann die Antriebswellen des Fahrzeugs antreibt. Bei diesem Getriebe wird in ungünstiger Weise viel Raum durch das Untersetzungsgetriebe in der Längsmittelebene des Fahrzeugs beansprucht. Darüberhinaus ist es grundsätzlich ungünstig, die nicht untersetzten Umdrehungen des Motors durch das Übertragungsgetriebe zu übertragen, weil dies den Verschleiß des Übertragungsgetriebes fördert.

Der Erfindung liegt die Aufgabe zugrunde, ein Getriebe der eingangs beschriebenen Art aufzuzeigen, das einen kompakten Aufbau aufweist und besonders variabel bezüglich seiner Einsatzmöglichkeiten in Fahrzeugen mit unterschiedlicher Lage des Motors relativ zu den Antriebswellen ist.

Erfindungsgemäß wird diese Aufgabe bei einem Getriebe der eingangs beschriebenen Art dadurch gelöst, daß das Gehäuse des Übertragungsgetriebes zum drehfesten Ansetzen an das Gehäuse des Untersetzungsgetriebes, direkt oder unter Zwischenordnung eines starren Adapterrings, vorgesehen ist und daß zum Einstellen eines Höhenversatzes und eines Seitenversatzes zwischen der an die Eingangswelle des Untersetzungsgetriebes anzuschließenden Ausgangswelle des Motors und einem gewünschten Anschlußpunkt der Antriebswellen an die Ausgangswelle des Übertragungsgetriebes die Winkellage des Gehäuses des Untersetzungsgetriebes um seine Eingangswelle relativ zu dem Motorblock und die Winkellage des Gehäuses des Übertragungsgetriebes um seine Eingangswelle relativ zu dem Gehäuse des Untersetzungsgetriebes einstellbar sind.

Die Verbindung des Übertragungsgetriebes mit dem Untersetzungsgetriebe ergibt einen besonders kompakten Aufbau des neuen Getriebes in seiner Gesamtheit. Gleichzeitig sind durch die Verschwenkbarkeit des Untersetzungsgetriebes relativ zu dem Motor und des Übertragungsgetriebes relativ zu dem Untersetzungsgetriebe mit demselben Getriebe unterschiedliche Höhenversätze und Seitenversätze zwischen dem Motor und den Antriebswellen einstellbar. Bei dieser Einstellung ergibt sich auch eine Schwenkbewegung des Übertragungsgetriebes relativ zu seiner Ausgangswelle, d. h. relativ zu den Antriebswellen. Die Schwenkachsen zwischen dem Motor und dem Untersetzungsgetriebe, dem Untersetzungsgetriebe und dem Übertragungsgetriebe und dem Übertragungsgetriebe und den Antriebswellen werden durch die in dem jeweiligen Ansatzpunkt koaxial angeordneten Wellen definiert. Dies sind die Ausgangswelle des Motors und die Eingangswelle des Untersetzungsgetriebes, die Ausgangswelle des Untersetzungsgetriebes und die Eingangswelle des Übertragungsgetriebes sowie die Ausgangswelle des Übertragungsgetriebes und der daran angeschlossene Teil der Antriebswellen, die durch Kardangelenke unterteilt sein können.

Um mit den erfindungsgemäßen Verschwenkbarkeiten einen möglichst großen Bereich des Höhenversatzes und des Seitenversatzes zwischen dem Motor und den Antriebswellen abdecken zu können, ist es sinnvoll, daß der laterale Abstand der Eingangs- und Ausgangswellen des Untersetzungsgetriebes und des Übertragungsgetriebes etwa gleich groß sind. In diesem Fall treten auch vergleichsweise geringe Abwinklungen zwischen dem Untersetzungsgetriebe und dem Übertragungsgetriebe über weite Bereiche des Höhenversatzes und des Seitenversatzes auf, womit konstruktive Vorteile verbunden sind.

Diese konstruktiven Vorteile sind insbesondere dann von Bedeutung, wenn die Ausgangswelle des Untersetzungsgetriebes an derselben Seite aus dem Gehäuse des Untersetzungsgetriebes austritt, wie die Eingangswelle in das Untersetzungsgetriebe eintritt. In diesem Fall ist das an das Untersetzungsgetriebe angesetzte Übertragungsgetriebe seitlich neben dem Untersetzungsgetriebe und/oder dem Motor angeordnet. Hieraus resultiert ein besonders kompakter Aufbau des neuen Getriebes. Gleichzeitig wird aber das Verschwenken des Übertragungsgetriebes relativ zu dem Untersetzungsgetriebe durch das Untersetzungsgetriebe bzw. dem Motor bezüglich großer Knickwinkel eingeschränkt.

Zur Verwirklichung des erfindungsgemäßen Getriebes ist es nicht erforderlich, daß das Gehäuse des Untersetzungsgetriebes gegenüber dem Motorblock und das Gehäuse des Übertragungsgetriebes gegenüber dem Gehäuse des Untersetzungsgetriebes kontinuierlich verschwenkbar sind. Zur sicheren Aufnahme der zwischen diesen Bauteilen um die Schwenkachsen auftretenden Drehmomente ist es aus konstruktiver Hinsicht günstiger, wenn das Gehäuse des Untersetzungsgetriebes an den Motorblock und das Gehäuse des Übertragungsgetriebes an das Gehäuse des Untersetzungsgetriebes nur in einer begrenzten Anzahl von diskreten Schwenkstellungen ansetzbar sind. Die Anzahl der Schwenkstellungen sollte jedoch mindestens sechs, vorzugsweise mindestens acht je Ansatzpunkt betragen.

Bei Verwendung eines starren Adapterrings zwischen den Gehäusen des Untersetzungsgetriebes und des Übertragungsgetriebes kann der Adapterring zur exakten Einstellung einer bestimmten Winkellage zwischen den beiden Gehäusen speziell hergerichtet sein. Beispielsweise können Befestigungsbohrungen in zwei endseitigen Flanschen einen speziellen Winkelversatz um die Achse des Adapterrings aufweisen. So dient die Ausgestaltung des Adapterrings selbst als Mittel zur Einstellung der Winkellage.

Das neue Getriebe kann auch so ausgelegt werden, daß ohne Verwendung von kardanischen Wellenverbindungen zwischen dem Motor und den Antriebswellen ein Schränkungswinkel zwischen dem Motor und der Längsmittelebene des Fahrzeugs kompensiert werden kann. Dies ist dadurch möglich, daß zwischen der Eingangswelle und der Ausgangswelle des Untersetzungsgetriebes und/oder zwischen der Eingangswelle und der Ausgangswelle des Übertragungsgetriebes ein Schränkungswinkel ungleich null vorgesehen ist. Zur Realisation dieses Schränkungswinkels ungleich null kann das Untersetzungsgetriebe bzw. das Übertragungsgetriebe mindestens ein Stirnflächenzahnrad oder mindestens zwei ineinander eingreifende Kegelzahnräder aufweisen. Wenn die beiden Kegelzahnräder bezüglich der Verjüngung ihres Zahnraddurchmessers gleich orientiert sind, ist der Schränkungswinkel zwischen Ihren Umlaufachsen so groß wie der mittlere Öffnungswinkel der beiden Kegelzahnräder.

Ein erfindungsgemäßes Fahrzeug mit einem außerhalb der Längsmittelebene des Fahrzeugs angeordneten, einen Motorblock und eine Ausgangswelle aufweisenden Motor und mit im Bereich der Längsmittelebene des Fahrzeugs verlaufenden Antriebswellen ist zwischen dem Motor und den Antriebswellen mit dem neuen Getriebe versehen. Die Antriebswellen führen typischerweise zu einem Vorderachsdifferential und einem Hinterachsdifferential einer Vorderachse und einer Hinterachse des Fahrzeugs. Entsprechend handelt es sich um ein vierradangetriebenes Fahrzeug. Konkret kann das Fahrzeug ein Teleskopmastgabelstapler, d. h. ein sogenannter Telescopic Boom Handler sein, bei dem in der Längsmittelebene des Fahrzeugs ein um eine horizontale Achse aufrichtbarer, teleskopierbarer Mast gelagert ist.

Die Erfindung wird im folgenden anhand von Ausführungsbeispielen näher erläutert und beschrieben. Dabei zeigt
- Figur 1: einen Teleskopmastgabelstapler in einer schematisierten Ansicht von unten mit einer ersten Ausführungsform des Getriebes,
- Figur 2: den Teleskopmastgabelstapler gemäß Figur 1 in einem schematisierten Querschnitt gemäß der Schnittlinie II-II in Figur 1,
- Figur 3: eine radiale Draufsicht auf das Getriebe des Teleskopmastgabelstaplers gemäß den Figuren 1 und 2,
- Figur 4: eine weitere radiale, teilweise weggebrochene Ansicht des Getriebes gemäß Figur 3 mit Blickrichtung etwa senkrecht zu Figur 3,
- Figur 5: eine achsiale Draufsicht auf einen ersten Flansch eines Adapterrings als Bestandteil des Getriebes gemäß den Figuren 3 und 4 gemäß der Schnittlinie V-V in Figur 4,
- Figur 6: eine achsiale Draufsicht auf einen zweiten Flansch des Adapterrings gemäß Figur 5 gemäß der Schnittlinie VI-VI in Figur 4,
- Figur 7: eine achsiale Draufsicht auf das Getriebe gemäß den Figuren 3 und 4,
- Figur 8: eine achsiale Draufsicht auf das Getriebe gemäß den Figuren 3 und 4 in einer ersten anderen Winkelstellung,
- Figur 9: eine achsiale Draufsicht auf das Getriebe gemäß den Figuren 3 und 4 in einer zweiten anderen Winkelstellung,
- Figur 10: eine achsiale Draufsicht auf das Getriebe gemäß den Figuren 3 und 4 in einer dritten anderen Winkelstellung,
- Figur 11: eine achsiale Draufsicht auf eine andere Ausführungsform des Getriebes und
- Figur 12: eine Ansicht von unten auf Teile eines Teleskopmastgabelstaplers mit einer weiteren Ausführungsform des Getriebes.

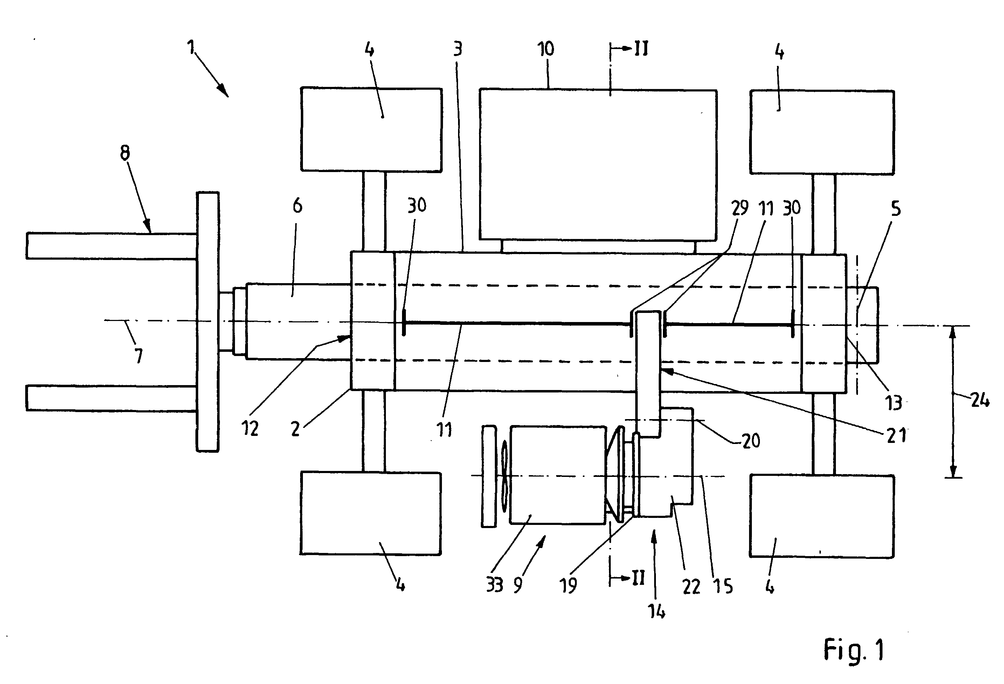

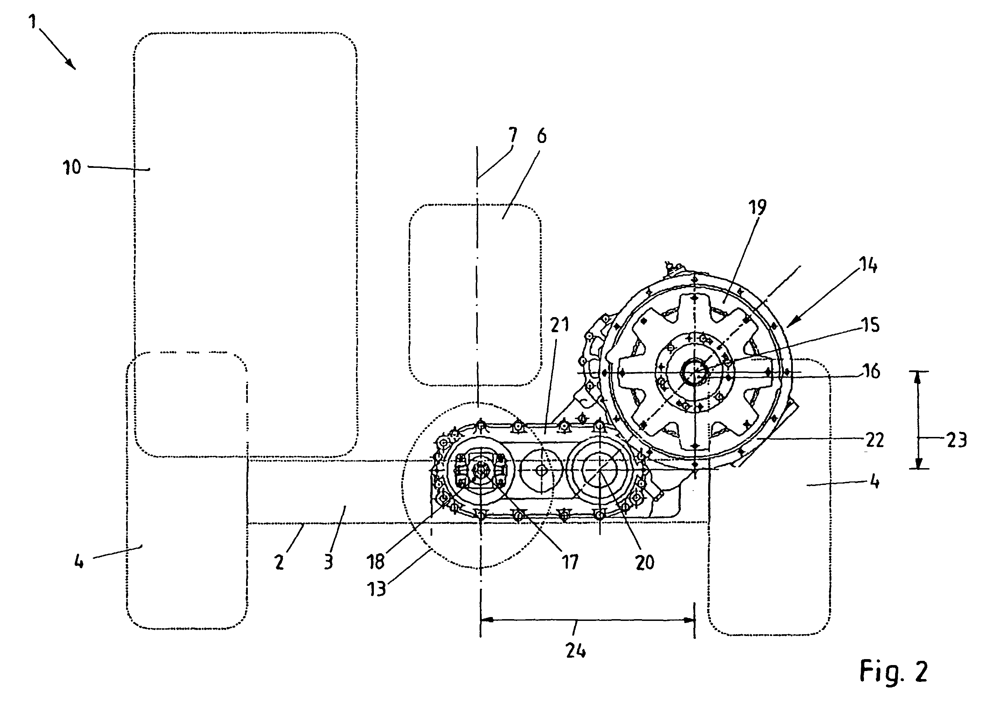

Der in den Figuren 1 und 2 dargestellte Teleskopmastgabelstapler 1 ist ein Fahrzeug 2 mit einem Rahmen 3 und vier angetriebenen Rädern 4. An dem Rahmen 3 ist um eine horizontale Achse 5 verschwenkbar ein teleskopierbarer Mast 6 gelagert. Der Mast 6 ist in der Längsmittelebene 7 des Fahrzeugs 2 um die Achse 5 gegenüber dem Rahmen 3 beispielsweise mit einem hier nicht dargestellten Hydraulikzylinder aufrichtbar. Weiterhin ist der Mast 6 in der Längsmittelebene 7 des Fahrzeugs 2 teleskopierbar. Das heißt, er besteht aus mehreren gegeneinander verfahrbaren Segmenten. An seinem freien Ende trägt der Mast 6 eine Gabel 8 zum Aufnehmen und Abladen von Lasten. Ein Motor 9 des Fahrzeugs 2 ist mit seinem Motorblock 33 außermittig, d. h. mit seitlichem Abstand zu der Längsmittelebene 7 des Fahrzeugs 2 angeordnet. Auf der dem Motor 9 gegenüberliegenden Seite der Längsmittelebene 7 ist eine Fahrerkabine 10 vorgesehen. Im Gegensatz zu dem Motor 9 verlaufen Antriebswellen 11, die zu einem Vorderachsdifferential 12 und einem Hinterachsdifferential 13 des Fahrzeugs 2 führen, in der Längsmittelebene des Fahrzeugs 2. So muß das von dem Motor kommende Drehmoment mit einem Getriebe 14 unter Überwindung eines Seitenversatzes und auch eines Höhenversatzes zwischen der Ausgangswelle des Motors 9 und den Antriebswellen 11 von dem Motor 9 auf die Antriebswellen 11 übertragen werden. Die hier nicht sichtbare Ausgangswelle des Motors 9 läuft wie die in dem Querschnitt gemäß Figur 2 sichtbare Eingangswelle 16 des Getriebes 14 um eine Achse 15 um, die oberhalb und seitlich neben einer Achse 17 in der Längsmittelebene 7 des Fahrzeugs 2 liegt, um welche die Ausgangswelle 18 des Getriebes 14 zusammen mit den angeschlossenen Teilen der Antriebswellen 11 umläuft.

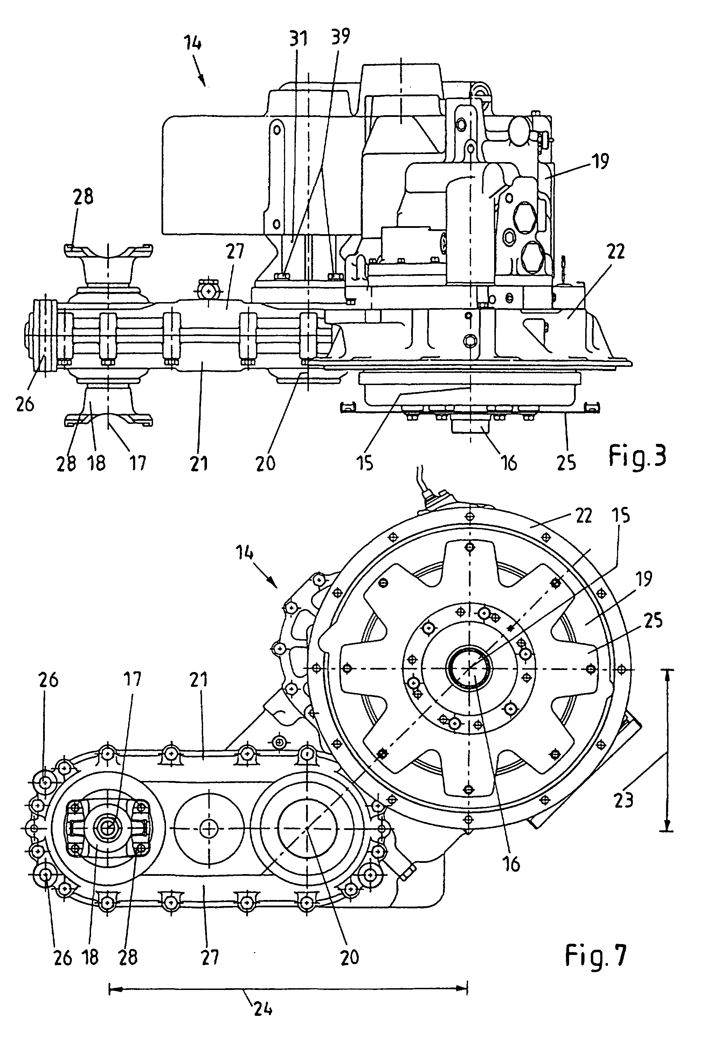

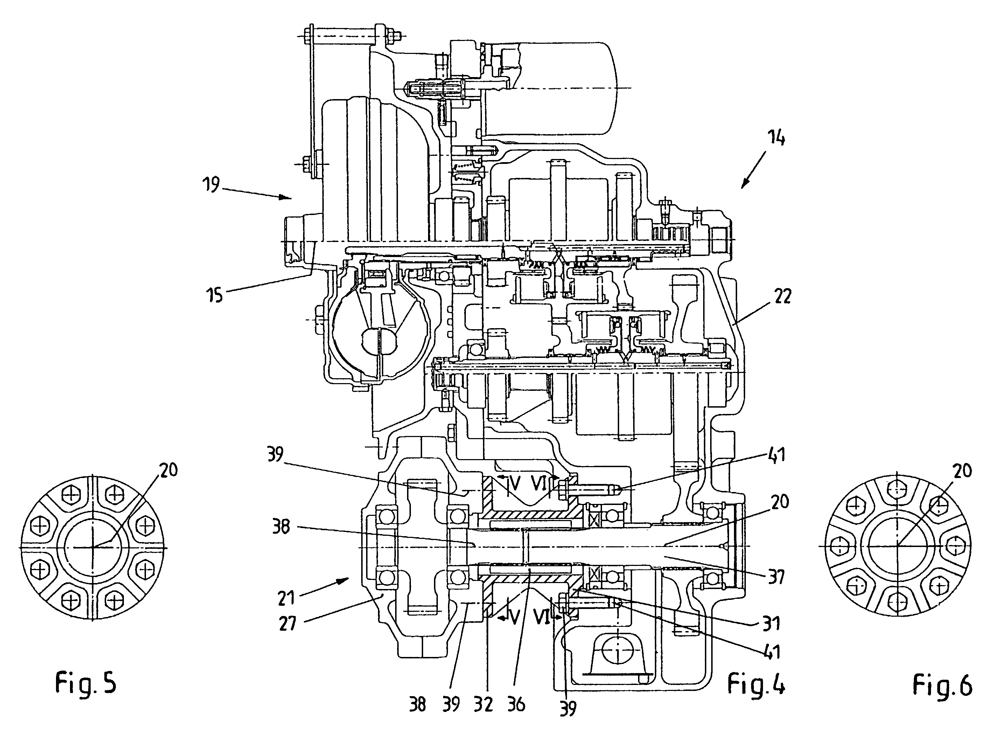

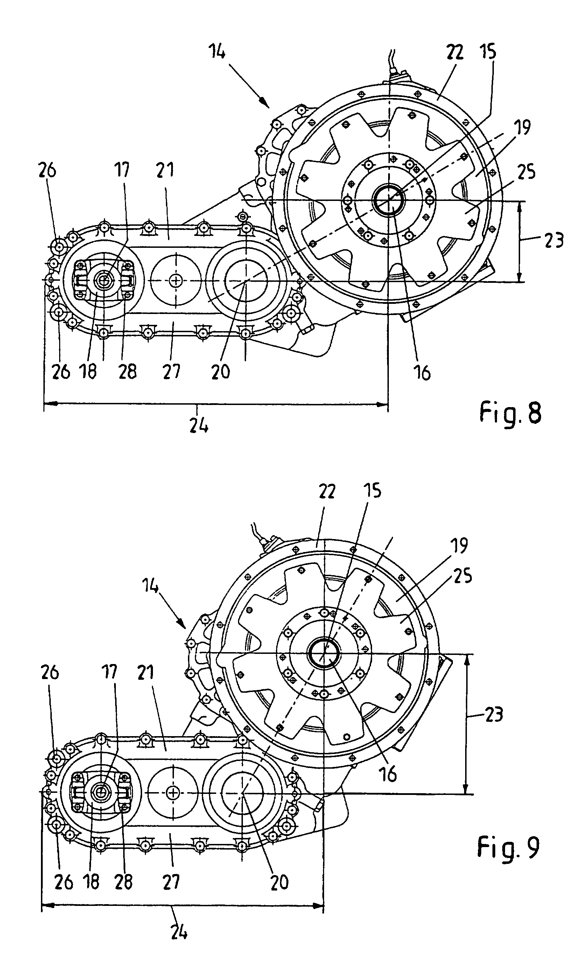

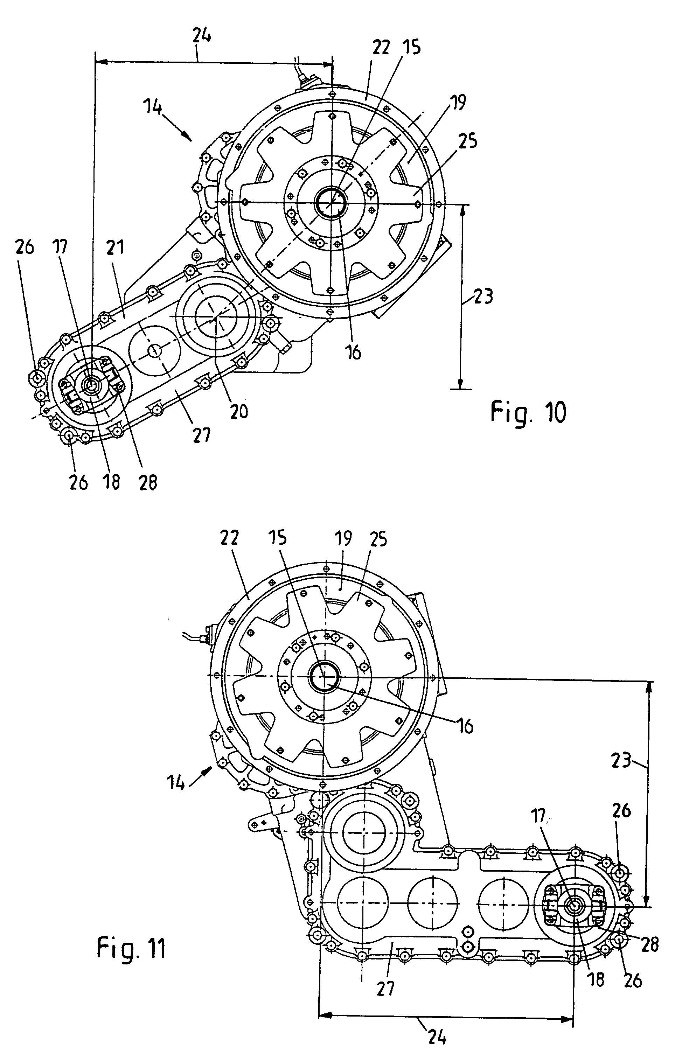

Wie genauer aus den das Getriebe 14 separat darstellenden Figuren 3, 4 und 7 hervorgeht, ist das Getriebe 14 in zwei trennbare Baugruppen unterteilt. An den Motorblock 33 des Motors 9 direkt angesetzt ist ein Gehäuse 22 eines Untersetzungsgetriebes 19, das die Umdrehungen der Ausgangswelle des Motors 9 untersetzt. Bei dem Untersetzungsgetriebe 19 handelt es sich hier um ein mehrere Gänge aufweisendes Schaltgetriebe mit automatischer Kupplung. Eine in Figur 4 sichtbare Ausgangswelle 37 des Untersetzungsgetriebes 19 läuft um eine Achse 20 um. Koaxial zu der Achse 20 ist eine ebenfalls nur in Figur 4 sichtbare Eingangswelle 38 eines Übertragungsgetriebes 21 des Getriebes 14 angeordnet und durch eine aufgesetzte Buchse 36 drehfest mit der Ausgangswelle 37 des Untersetzungsgetriebes 19 verbunden. Das Übertragungsgetriebe 21 überträgt im wesentlichen das Drehmoment von dem Untersetzungsgetriebe 19 auf die Antriebswellen 11. Es kann aber auch zusätzlich eine feste Unter- oder Übersetzung für die Umdrehungen der Ausgangswelle des Untersetzungsgetriebes 19 bereitstellen. Die Ausgangswelle 18 des Übertragungsgetriebes 21 ist die Ausgangswelle des gesamten Getriebes 14, die mit den eingangsseitigen Teilen der Antriebswellen 11 um die Achse 17 umläuft. Die Eingangswelle und die Ausgangswelle sowohl des Untersetzungsgetriebes 19 als auch des Übertragungsgetriebes 21 sind parallel versetzt zueinander angeordnet, wobei der Versatz in beiden Fällen etwa gleich groß ist. Die Anschlußpunkte für den Motorblock 33 und ein Gehäuse 27 des Übertragungsgetriebes 21 befinden sich auf derselben Seite des Gehäuses 22 des Untersetzungsgetriebes 19, so daß das Übertragungsgetriebe 21 in kompakter Weise neben dem Untersetzungsgetriebe 19 angeordnet ist. In den Anschlußpunkten des Gehäuses 22 des Untersetzungsgetriebes 19 an den Motorblock 33 und des Gehäuses 27 Übertragungsgetriebes 21 an das Gehäuse 22 des Untersetzungsgetriebes 19 sind verschiedene Schwenkstellungen zwischen dem Untersetzungsgetriebe 19 und dem Motor 9 bzw. dem Übertragungsgetriebe 21 und dem Untersetzungsgetriebe 19 einstellbar. Auf diese Weise kann mit demselben Getriebe 14 bei Verwendung in unterschiedlichen Fahrzeugen 2 ein unterschiedlich großer Höhenversatz 23 und Seitenversatz 24 zwischen der Achse 15 und der Achse 17 kompensiert werden. Dies wird später in Zusammenhang mit den Figuren 7 bis 10 noch näher erläutert werden.

Die aus den Figuren 3, 4 und 7 hervorgehende konstruktive Ausgestaltung des Getriebes 14 läßt erkennen, daß hier keine stufenlose Verschwenkung des Gehäuses 22 des Untersetzungsgetriebes 19 gegenüber dem dort nicht dargestellten Motorblock 33 und des Gehäuses 27 des Übertragungsgetriebes 21 gegenüber dem Gehäuse des Untersetzungsgetriebes 19 vorgesehen ist.

Vielmehr ist ein sternförmiger Flansch 25 zum Befestigen des Gehäuses 22 des Untersetzungsgetriebes 19 an den hier nicht dargestellten Motorblock 33 achtfach drehsymmetrisch ausgebildet, so daß es in acht diskreten Drehstellungen um die Achse 15 an dem Motorblock 33 befestigt werden kann. Die Verbindung zwischen dem Gehäuse 22 des Untersetzungsgetriebes 19 und dem Gehäuse 27 des Übertragungsgetriebes 21 ist in der dargestellten Ausführungsform ebenfalls achtfach drehsymmetrisch ausgebildet. Konkret ist ein Adapterring 31 mit zwei endseitigen Flanschen 32 und 34 zwischen den Gehäusen 22 und 27 vorgesehen. Der Adapterring 31 ist in der Ansicht gemäß Figur 4 sichtbar; die Flansche 32 und 34 sind zusätzlich in den Figuren 5 und 6 separat dargestellt. Jeder der beiden Flansche 32 und 34 weist acht drehsymmetrisch um die Achse 20 zueinander angeordnete Befestigungsbohrungen 35 auf, wobei die Befestigungsbohrungen 35 in den beiden Flanschen 32 und 34 um π/8 um die Achse 20 gegeneinander versetzt angeordnet sind. Dieser Winkelversatz kann zur Kompensation eines bestimmten Höhenversatzes 23 oder Seitenversatzes 24 auch einen anderen Wert annehmen. Insbesondere kann dieser Winkelversatz auch als alleiniges Mittel vorgesehen sein, um die Winkellage zwischen den Gehäusen 22 und 27 festzulegen, wobei die Befestigungsbohrungen 35 in den Flanschen 32 und 34 jeweils nicht drehsymmetrisch angeordnet sein müssen. Durch die Befestigungsbohrungen in den Flansche 32 und 33 greifen Befestigungsschrauben 39 hindurch und in Gewindebohrungen 41 in den Gehäusen 22 und 27 ein. Innerhalb des Adapterrings 31 ist die Buchse 36 zur drehfesten Verbindung der Ausgangswelle 37 mit der Eingangswelle 38 angeordnet. Befestigungsbohrungen 26 zur Lagerung des freien Endes des Gehäuses 27 des Übertragungsgetriebes 22 an dem Rahmen 3 des Fahrzeugs 2 gemäß Figur 1, um den Anschlußpunkt der hier nicht dargestellten Antriebswellen 11 an die Ausgangswelle 18 des Übertragungsgetriebes 21 festzulegen, lassen ebenfalls verschiedene Schwenkstellungen zu, die untereinander einen Abstand von 45° bzw. π/4 aufweisen. Der eigentliche Anschluß der Antriebswellen 11 an die Ausgangswelle 18 des Übertragungsgetriebes 21 erfolgt durch Kardangelenke, wobei die Ausgangswelle 18 an ihren beiden Enden unmittelbar in jeweils eine Gabel 28 übergeht. In Figur 1 sind die Kardangelenke 29 beiderseits des Übertragungsgetriebes 21 durch Querstriche angedeutet. Weitere Kardangelenke 30 sind vor dem Vorderachsdifferential 12 und dem Hinterachsdifferential 13 ebenfalls durch Querstriche angedeutet. Die Kardangelenke 29 und 30 können in der Längsmittelebene 7 des Fahrzeugs 1 jeweils um bis zu 7° geknickt sein, um ein Festsetzen zu verhindern. Darüberhinausgehende Knickwinkel führen aber zu Gleichlaufschwankungen.

In Figur 7 entspricht die Winkellage des Gehäuses 22 des Untersetzungsgetriebes 19 und des Gehäuses 27 des Übertragungsgetriebes 21 der Einbausituation des Fahrzeugs 2 gemäß Figur 1. In den Figuren 8, 9 und 10 sind unterschiedliche andere Winkellagen dargestellt, die zu unterschiedlich großen Höhenversätzen 23 und Seitenversätzen 24 zwischen der Ausgangswelle des Motors bzw. der Eingangswelle 16 des Untersetzungsgetriebes 19 und der Ausgangswelle 18 des Übertragungsgetriebes 21 führen. Das Getriebe 14 mit denselben Komponenten kann so für eine Vielzahl von Fahrzeugen 2 mit unterschiedlichen Anforderungen an den Höhenversatz 23 und den Seitenversatz 24 verwendet werden.

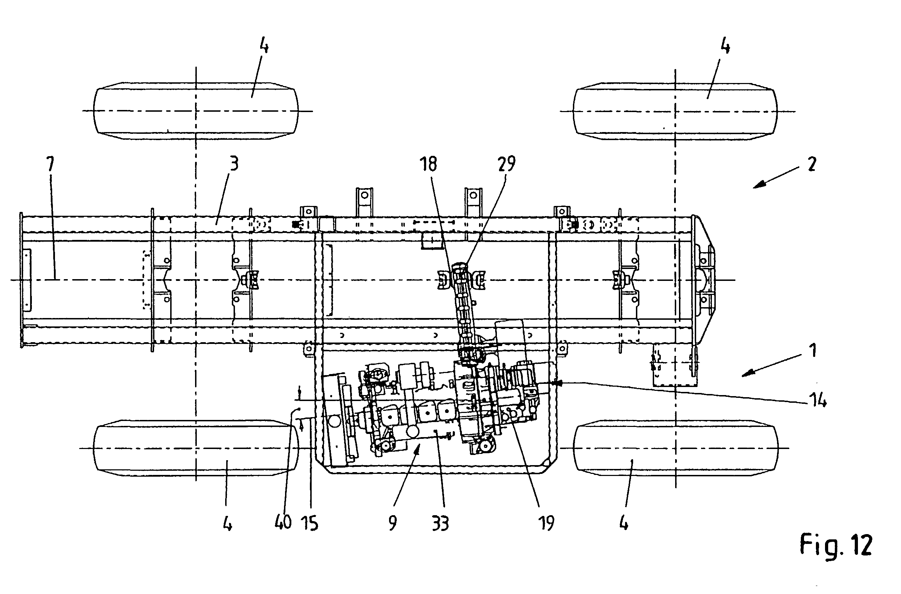

Figur 11 gibt eine weitere Ausführungsform des Getriebes 14 wieder, die sich von derjenigen gemäß den bisherigen Figuren im wesentlichen dadurch unterscheidet, daß das Übertragungsgetriebe 21 keine gradlinige radiale Erstreckung aufweist, sondern in dieser Richtung L-förmig abgewinkelt ist. Hiermit kann besonderen Einbaubedingungen bei einem bestimmten Fahrzeug Rechnung getragen werden.

Bei den in Figur 12 dargestellten Teilen handelt es sich um Teile eines Teleskopmastgabelstaplers 1 in gegenüber Figur 1 abgewandelter Ausführungsform. Bei dem Fahrzeug 2 gemäß Figur 12 ist der Motor 9 mit der Achse 15 um einen Schränkungswinkel 40 von 6° gegenüber der Längsmittelebene 7 des Fahrzeugs 2 geschränkt ausgerichtet. Dieser Schränkungswinkel 40 wird von dem Übertragungsgetriebe 21 kompensiert, dessen Ausgangswelle 18 um den Schränkungswinkel 40 geschränkt zu seiner Eingangswelle orientiert ist. Dies ist beispielsweise durch ein Paar von Kegelzahnrädern oder ein einzelnes Stirnflächenzahnrad, ein sogenanntes Face Gear zu realisieren. Wie bei den bisherigen Ausführungsformen des Getriebes 14 ist das Untersetzungsgetriebe 19 aber wieder drehfest an den Motorblock 33 und das Übertragungsgetriebe 21 drehfest an das Untersetzungsgetriebe 19 angesetzt.

### BEZUGSZEICHENLISTE

- 1 -: Teleskopmastgabelstapler
- 2 -: Fahrzeug
- 3 -: Rahmen
- 4 -: Rad
- 5 -: Achse
- 6 -: Mast
- 7 -: Längsmittelebene
- 8 -: Gabel
- 9 -: Motor
- 10 -: Fahrerkabine

- 11 -: Antriebswelle
- 12 -: Vorderachsdifferential
- 13 -: Hinterachsdifferential
- 14 -: Getriebe
- 15 -: Achse
- 16 -: Eingangswelle
- 17 -: Achse
- 18 -: Ausgangswelle
- 19 -: Untersetzungsgetriebe
- 20 -: Achse

- 21 -: Übertragungsgetriebe
- 22 -: Gehäuse
- 23 -: Höhenversatz
- 24 -: Seitenversatz
- 25 -: Flansch
- 26 -: Befestigungsbohrung
- 27 -: Gehäuse
- 28 -: Gabel
- 29 -: Kardangelenk
- 30 -: Kardangelenk

- 31 -: Adapterring
- 32 -: Flansch
- 33 -: Motorblock
- 34 -: Flansch
- 35 -: Befestigungsbohrung
- 36 -: Buchse
- 37 -: Ausgangswelle
- 38 -: Eingangswelle
- 39 -: Befestigungsschraube
- 40 -: Schränkungswinkel

- 41 -: Gewindebohrung

## Patentansprüche

1. Getriebe (14) für ein Fahrzeug (2) mit einem außerhalb der Längsmittelebene des Fahrzeugs angeordneten, einen Motorblock und eine Ausgangswelle aufweisenden Motor (9), wobei ein Untersetzungsgetriebe (19), das ein Gehäuse (22) zum drehfesten Ansetzen an den Motorblock und eine zu seiner Eingangswelle (16) versetzte Ausgangswelle aufweist, und ein Übertragungsgetriebe (21) zum Antreiben von im Bereich der Längsmittelebene des Fahrzeugs verlaufenden Antriebswellen (11), das ein weiteres Gehäuse (27) und ebenfalls eine zu seiner Eingangswelle versetzte Ausgangswelle (18) aufweist, vorgesehen sind, **dadurch gekennzeichnet, daß** das Gehäuse (27) des Übertragungsgetriebes (21) zum drehfesten Ansetzen an das Gehäuse (22) des Untersetzungsgetriebes (19), direkt oder unter Zwischenordnung eines starren Adapterrings (36), vorgesehen ist und daß zum Einstellen eines Höhenversatzes (23) und eines Seitenversatzes (24) zwischen der an die Eingangswelle (16) des Untersetzungsgetriebes (19) anzuschließenden Ausgangswelle des Motors (9) und einem gewünschten Anschlußpunkt der Antriebswellen (11) an die Ausgangswelle (18) des Übertragungsgetriebes (21) die Winkellage des Gehäuses (22) des Untersetzungsgetriebes (19) um seine Eingangswelle (16) relativ zu dem Motorblock (33) und die Winkellage des Gehäuses (27) des Übertragungsgetriebes (21) um seine Eingangswelle (38) relativ zu dem Gehäuse (22) des Untersetzungsgetriebes (19) einstellbar sind.

2. Getriebe nach Anspruch 1, **dadurch gekennzeichnet, daß** die Ausgangswelle (37) des Untersetzungsgetriebes (19) an derselben Seite aus dem Gehäuse (22) des Untersetzungsgetriebes (19) austritt, wie dessen Eingangswelle (16) in das Gehäuse (22) eintritt.

3. Getriebe nach Anspruch oder 2, **dadurch gekennzeichnet, daß** das Gehäuse (27) des Übertragungsgetriebes (21) in einer begrenzten Anzahl von diskreten Schwenkstellungen an das Gehäuse (27) des Untersetzungsgetriebes (19) ansetzbar ist.

4. Getriebe nach einem der Ansprüche 1 bis 3, **dadurch gekennzeichnet, daß** der Adapterring (31) zwei endseitige Flansche (32 und 34) mit um seine Achse (20) herum angeordneten Befestigungsbohrungen (35) aufweist.

5. Getriebe nach Anspruch 4, **dadurch gekennzeichnet, daß** die Befestigungsbohrungen (35) in mindestens einen der beiden Flansche (32, 34) des Adapterrings (31) speziell zur Einstellung einer bestimmten Winkellage des Gehäuses (27) des Übertragungsgetriebes (21) um seine Eingangswelle (38) relativ zu dem Gehäuse (22) des Untersetzungsgetriebes (19) eingebracht sind.

6. Getriebe nach einem der Ansprüche 1 bis 5, **dadurch gekennzeichnet, daß** das Gehäuse (22) des Untersetzungsgetriebes (19) in einer begrenzten Anzahl von diskreten Schwenkstellungen an den Motorblock (9) und/oder das Gehäuse (27) des Übertragungsgetriebes (21) in einer begrenzten Anzahl von diskreten Schwenkstellungen an das Gehäuse (22) des Untersetzungsgetriebes (19) ansetzbar ist.

7. Getriebe nach einem der Ansprüche 1 bis 4, **dadurch gekennzeichnet, daß** zwischen der Eingangswelle (16) und der Ausgangswelle (37) des Untersetzungsgetriebes (19) und/oder zwischen der Eingangswelle (38) und der Ausgangswelle (18) des Übertragungsgetriebes (21) ein Schränkungswinkel (40) ungleich null vorgesehen ist.

8. Getriebe nach Anspruch 7, **dadurch gekennzeichnet, daß** das Untersetzungsgetriebe (19) und/oder das Übertragungsgetriebe (21) mindestens ein Stirnflächenzahnrad oder mindestens zwei Kegelzahnräder aufweist.

9. Fahrzeug (2) mit einem außerhalb der Längsmittelebene (7) des Fahrzeugs (2) angeordneten, einen Motorblock und eine Ausgangswelle aufweisenden Motor (9), mit im Bereich der Längsmittelebene (7) des Fahrzeugs (2) verlaufenden Antriebswellen (11) und mit dem zwischen dem Motor (9) und den Antriebswellen (11) angeordneten Getriebe (14) nach einem der Ansprüche 1 bis 7.

10. Fahrzeug nach Anspruch 9, **dadurch gekennzeichnet, daß** es ein Teleskopmastgabelstapler (1) ist.

## Claims

1. A gearbox (14) for a vehicle (2) having an engine (9) including an engine unit and an output shaft, the engine being arranged outside the longitudinal centre plane of the vehicle, said gearbox comprising a reducing transmission (19) including a housing (22) for a fixed connection to the engine unit (33) and an output shaft (37) arranged out of line with respect to its input shaft (16); and a transfer transmission (21) for driving drive shafts (11) running in the region of the longitudinal centre plane of the vehicle (2), said transfer transmission (21) including a further housing (27) and an output shaft (18) also arranged out of line with respect to its input shaft (38), **characterized in that** said housing (27) of said transfer transmission (21) is provided for a fixed connection to said housing (22) of said reducing transmission (19), either directly or via a rigid adapter; and **in that** an angle position of said housing (22) of said reducing transmission (19) is adjustable about its input shaft (16) with respect to the engine unit (33), and an angle position of said housing (27) of said transfer transmission (21) is adjustable about its input shaft (38) with respect to said housing (22) of said reducing transmission (19) for adjusting a height distance (23) and a lateral distance (24) between the output shaft of the engine (9) connected to said input shaft (16) of said reducing transmission (19) and a connecting point of said drive shafts (11) and said output shaft (18) of said transfer transmission (21).

2. The gearbox of claim 1, **characterized in that** said output shaft (37) of said reducing transmission (19) is arranged to exit said housing (22) of said reducing transmission (19) on the same side as said input shaft (16) enters said housing (22).

3. The gearbox of claim 1 or 2, **characterized in that** said housing (27) of said transfer transmission (21) is designed to be connected to said housing (22) of said reducing transmission (19) in a limited number of discrete pivoting positions.

4. The gearbox of any of the claims 1 to 3, **characterized in that** said adapter ring (31) comprises two flanges (32 and 34) arranged at both ends of said adapter ring (31) and having fixing bores (35) around the axis (20) of said adapter ring (31).

5. The gearbox of claim 4, **characterized in that** said fixing bores (35) are especially provided in at least one of said two flanges (32, 34) of said adapter ring (31) for an adjustment of one desired position in angle of said housing (27) of said transfer transmission (21) about its input shaft (38) with respect to said housing (22) of said reducing transmission (19).

6. The gearbox of any of the claims 1 to 5, **characterized in that** said housing (22) of said reducing transmission (19) is connectable to said engine unit (9) in a limited number of discrete pivoting positions, and/or said housing (27) of said transfer transmission (21) is connectable to said housing (22) of said reducing transmission (19) in a limited number of discrete pivoting positions.

7. The gearbox of any of the claims1 to 4, **characterized in that** a cast off-angle other than zero is provided between said input shaft (16) and said output shaft (37) of said reducing transmission (19) and/or between said input shaft (38) and said output shaft (18) of said transfer transmission (19).

8. The gearbox of claim 7, **characterized in that** said reducing transmission (19) and/or said transfer transmission (21) includes at least one face gear or at least two conical gears.

9. A vehicle (2) comprising an engine (9) including an engine unit (33) and an output shaft, said engine (9) being arranged outside the longitudinal centre plane (7) of said vehicle (2); drive shafts (11) running in the region of the longitudinal centre plane (7) of said vehicle (2); and a transmission (14) of any of the claims 1 to 7 arranged between said engine (9) and said drive shafts (11).

10. The vehicle of claim 9, **characterized in that** said vehicle (2) is a telescoping boom handler (1).

## Revendications

1. Transmission (14) pour un véhicule (2) comportant un moteur (9) disposé à l'extérieur du plan médian longitudinal du véhicule, avec un bloc moteur et un arbre de sortie, dans laquelle sont prévus un démultiplicateur (19) qui comporte un carter (22) destiné à être placé solidairement en rotation sur le bloc moteur et un arbre de sortie décalé par rapport à son arbre d'entrée (16), ainsi qu'un mécanisme de transmission (21) pour l'entraînement d'arbres moteurs (11) s'étendant dans la zone du plan médian longitudinal du véhicule, qui comporte un autre carter (27) et éventuellement un arbre de sortie (18) décalé par rapport à son arbre d'entrée; **caractérisée en ce que** le carter (27) du mécanisme de transmission (21) est prévu pour être placé solidairement en rotation sur le carter (22) du démultiplicateur (19), directement ou par interposition d'un anneau d'adaptateur (36) rigide, et **en ce que** pour régler un décalage en hauteur (23) et un décalage latéral (24) entre l'arbre de sortie du moteur (9) à raccorder à l'arbre d'entrée (16) du démultiplicateur (19), et un point de raccordement voulu des arbres moteurs (11) sur l'arbre de sortie (18) du mécanisme de transmission (21), on peut régler la position angulaire du carter (22) du démultiplicateur (19) autour de son arbre d'entrée (16), par rapport au bloc moteur (33), ainsi que la position angulaire du carter (27) du mécanisme de transmission (21) autour de son arbre d'entrée (38), par rapport au carter (22) du démultiplicateur (19).

2. Transmission selon la revendication 1, **caractérisée en ce que** l'arbre de sortie (37) du démultiplicateur (19) sort du carter (22) du démultiplicateur (19) sur le même côté que son arbre d'entrée (16) entre dans le carter (22).

3. Transmission selon la revendication 1 ou 2, **caractérisée en ce que** le carter (27) du mécanisme de transmission (21) peut être placé sur le carter (27) du démultiplicateur (19), dans un nombre limité de positions discrètes de pivotement.

4. Transmission selon l'une des revendications 1 à 3, **caractérisée en ce que** l'anneau d'adaptateur (31) comporte deux brides (32 et 34) terminales avec des trous de fixation (35) disposés autour de son axe (20).

5. Transmission selon la revendication 4, **caractérisée en ce que** les trous de fixation (35) sont pratiqués dans au moins l'une des deux brides (32, 34) de l'anneau d'adaptateur (31), en particulier pour le réglage d'une position angulaire déterminée du carter (27) du mécanisme de transmission (21), autour de son arbre d'entrée (38), par rapport au carter (22) du démultiplicateur (19).

6. Transmission selon l'une des revendications 1 à 5, **caractérisée en ce que** le carter (22) du démultiplicateur (19) peut être placé dans un nombre limité de positions discrètes de pivotement sur le bloc moteur (9) et/ou le carter (27) du mécanisme de transmission (21) peut être placé dans un nombre limité de positions discrètes de pivotement sur le carter (22) du démultiplicateur (19).

7. Transmission selon l'une des revendications 1 à 4, **caractérisée en ce qu'**il est prévu un angle d'avoyage (40) non égal à zéro, entre l'arbre d'entrée (16) et l'arbre de sortie (37) du démultiplicateur (19) et/ou entre l'arbre d'entrée (38) et l'arbre de sortie (18) du mécanisme de transmission (21).

8. Transmission selon la revendication 7, **caractérisée en ce que** le démultiplicateur (19) et/ou le mécanisme de transmission (21) comporte au moins une roue dentée droite ou au moins deux roues dentées coniques.

9. Véhicule (2) comportant un moteur (9) disposé à l'extérieur du plan médian longitudinal (7) du véhicule, un bloc moteur et un arbre de sortie, comportant des arbres moteurs (11) s'étendant dans la zone du plan médian longitudinal (7) du véhicule (2) et comportant la transmission (14) selon l'une des revendications 1 à 7, disposée entre le moteur (9) et les arbres moteurs (11).

10. Véhicule selon la revendication 9, **caractérisé en ce qu'**il s'agit d'un chariot élévateur à fourche à mât télescopique (1).
